# EUROPÄISCHE PATENTANMELDUNG

(11) **EP 4 202 359 A1**
(43) Veröffentlichungstag der Anmeldung: **28.06.2023**
(21) Anmeldenummer: 21217406.4
(22) Anmeldetag: 23.12.2021
(51) Int. Cl.: G01C 15/00

(54) **VERFAHREN ZUM BERECHNEN DER POSE EINES MESSGERÄTES IM BEZUGSSYSTEM EINES GEOMETRIEMODELLS**

(71) Anmelder: HILTI Aktiengesellschaft, 9494 Schaan (LI)
(72) Erfinder: Gloor, Thomas, 9495 Triesen (LI)
(74) Vertreter: Hilti Aktiengesellschaft Corporate Intellectual Property

(57) **Zusammenfassung**

Verfahren zum Berechnen der Pose eines Messgerätes (11), das in einer Messumgebung (12) mit mehreren Begrenzungsflächen (F-1, F-2, F-3, F-4) aufgestellt wird und das eine Distanzmesseinrichtung mit einem Messstrahl und mindestens eine Winkelmesseinrichtung aufweist, im Bezugssystem eines Geometriemodells, welches zumindest die Begrenzungsflächen (F-1, F-2, F-3, F-4) der Messumgebung abbildet, mittels eines Mikrocontrollers, der mit dem Messgerät (11) kommunizierend verbunden ist und der einen Algorithmus zum Berechnen der Pose aufweist.

## Beschreibung

Die Erfindung betrifft ein Verfahren zum Berechnen der Pose eines Messgerätes im Bezugssystem eines Geometriemodells gemäß dem Oberbegriff des Anspruchs 1.

### Stand der Technik

Totalstationen sind Messgeräte, die über Winkel- und Distanzmesseinheiten verfügen und Winkel- und Distanzmessungen ausführen. Die Winkel- und Distanzmesswerte werden im Bezugssystem der Totalstation gemessen und müssen für eine absolute Positionsbestimmung noch mit einem äußeren Bezugssystem verknüpft werden.

Bei bekannten Verfahren zum Berechnen der Pose eines Messgerätes in einem äußeren Bezugssystem werden Zielobjekte an bekannten Kontrollpunkten positioniert und die Koordinaten der Kontrollpunkte werden im Bezugssystem des Messgerätes gemessen. Da die Koordinaten der Kontrollpunkte im äußeren Bezugssystem bekannt sind, können die Position und Orientierung (Pose) des Messgerätes mithilfe der Koordinaten der Kontrollpunkte im äußeren Bezugssystem und im Bezugssystem des Messgerätes berechnet werden.

Das Berechnen der Pose eines Messgerätes mithilfe bekannter Kontrollpunkte hat den Nachteil, dass an den Kontrollpunkten Zielobjekte positioniert werden müssen.

### Darstellung der Erfindung

Die Aufgabe der vorliegenden Erfindung besteht darin, das Berechnen der Pose eines Messgerätes im Bezugssystem eines Geometriemodells dahingehend zu vereinfachen, dass die Berechnen der Pose ohne Kontrollpunkte möglich ist.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zum Berechnen der Pose eines Messgerätes, das in einer Messumgebung mit mehreren Begrenzungsflächen aufgestellt wird und das eine Distanzmesseinrichtung mit einem Messstrahl und eine Winkelmesseinrichtung aufweist, im Bezugssystem eines Geometriemodells, welches zumindest die Begrenzungsflächen der Messumgebung abbildet, mittels eines Mikrocontrollers, die mit dem Messgerät kommunizierend verbunden ist und die einen Algorithmus zum Berechnen der Pose aufweist, umfasst erfindungsgemäß folgende Schritte:
▪ Erstellen einer Polylinie aus dem Geometriemodell, wobei die Polylinie den horizontalen Verlauf der Begrenzungsflächen senkrecht zur Gravitationsrichtung darstellt und mindestens drei Linienabschnitte umfasst,
▪ Ausführen von N, N ≥ 4 Messungen mit dem Messgerät in N verschiedenen Orientierungen des Messgerätes, wobei der Messstrahl der Distanzmesseinrichtung in den N verschiedenen Orientierungen auf mindestens zwei verschiedene Begrenzungsflächen auftrifft und N Messpunkte definiert und in jeder der N Orientierungen des Messgerätes ein Horizontalwinkel und eine Horizontaldistanz zwischen dem jeweiligen Messpunkt und dem Messgerät als Messwerte bestimmt werden und
▪ Ausführen des Algorithmus zum Berechnen der Pose, wobei der Algorithmus eine Folge von mindestens drei Schritten umfasst und die Schritte aus einem ersten Schritt, zweiten Schritt, dritten Schritt, vierten Schritt, fünften Schritt und sechsten Schritt ausgewählt sind, und
   (1) im ersten Schritt drei Messpunkte der N Messpunkte und drei Linienabschnitte der Polylinie ausgewählt werden und für den Fall, dass vor dem Start des Algorithmus keine Zuordnung zwischen Messpunkten und Linienabschnitten durchgeführt wurde, die ausgewählten drei Messpunkte und ausgewählten drei Linienabschnitte einander zugeordnet werden,
   (2) im zweiten Schritt mittels der Messwerte der ausgewählten drei Messpunkte und der Koordinaten der ausgewählten drei Linienabschnitte die Anzahl der möglichen Lösungen für die Pose des Messgerätes bestimmt wird und für den Fall, dass eine Lösung oder zwei Lösungen existieren, die Messkoordinaten von mindestens zwei der ausgewählten drei Messpunkte im Bezugssystem des Geometriemodells bestimmt werden,
   (3) im dritten Schritt
      - für den Fall, dass im zweiten Schritt der Folge keine Lösung bestimmt wurde, das Verfahren mit dem sechsten Schritt der Folge fortgesetzt wird,
      - für den Fall, dass im zweiten Schritt der Folge eine Lösung bestimmt wurde, aus den Messkoordinaten und Messwerten eine Zwischenpose für das Messgerät berechnet wird, diejenigen Messpunkte der N Messpunkte, die ein vorgegebenes Qualitäts-Kriterium erfüllen, als qualifizierte Messpunkte bestimmt werden und das Verfahren mit dem fünften Schritt der Folge fortgesetzt wird,
      - für den Fall, dass im zweiten Schritt der Folge zwei Lösungen bestimmt wurden, aus den Messkoordinaten und Messwerten eine erste Testpose und zweite Testpose berechnet werden, für die erste Testpose und zweite Testpose jeweils diejenigen Messpunkte der N Messpunkte, die ein vorgegebenes Qualitäts-Kriterium erfüllen, als erste qualifizierte Messpunkte bzw. zweite qualifizierte Messpunkte bestimmt werden und das Verfahren mit dem vierten Schritt der Folge fortgesetzt wird,
   (4) im vierten Schritt die erste Testpose und zweite Testpose anhand eines vorgegebenen Vergleichs-Kriteriums hinsichtlich ihrer Eignung verglichen werden, wobei
      - für den Fall, dass eine der ersten Testpose und zweiten Testpose als besser geeignet bewertet wird, diese Testpose als Zwischenpose definiert wird und das Verfahren mit dem fünften Schritt der Folge fortgesetzt wird, und
      - für den Fall, dass keine der ersten Testpose und zweiten Testpose als besser geeignet bewertet wird, das Verfahren mit dem sechsten Schritt der Folge fortgesetzt wird,
   (5) im fünften Schritt geprüft wird, ob eine Pose für das Messgerät gespeichert ist, wobei
      - für den Fall, dass keine Pose für das Messgerät gespeichert ist, die Zwischenpose, die im dritten Schritt oder vierten Schritt der Folge bestimmt wurde, als Pose für das Messgerät definiert wird oder mithilfe der qualifizierten Messpunkte eine aktualisierte Pose berechnet und als Pose für das Messgerät definiert wird und das Verfahren mit dem sechsten Schritt der Folge fortgesetzt wird, und
      - für den Fall, dass eine Pose für das Messgerät gespeichert ist, die Zwischenpose, die im dritten Schritt oder vierten Schritt der Folge bestimmt wurde, anhand eines vorgegebenen weiteren Vergleichs-Kriteriums mit der gespeicherten Pose verglichen wird, wobei
         für den Fall, dass die Zwischenpose als besser geeignet bewertet wird, die Zwischenpose als Pose definiert wird oder mithilfe der qualifizierten Messpunkte eine aktualisierte Pose berechnet und als Pose für das Messgerät definiert wird und das Verfahren mit dem sechsten Schritt der Folge fortgesetzt wird, und
         für den Fall, dass die Zwischenpose als nicht besser geeignet bewertet wird, das Verfahren mit dem sechsten Schritt der Folge fortgesetzt wird, und
   (6) im sechsten Schritt anhand eines vorgegebenen Abbruch-Kriteriums entschieden wird, ob eine weitere Folge durchgeführt wird, wobei
      - für den Fall, dass eine weitere Folge durchgeführt wird, das Verfahren mit dem ersten Schritt der Folge fortgesetzt wird,
      - für den Fall, dass keine weitere Folge durchgeführt wird und eine Pose für das Messgerät definiert ist, das Verfahren beendet wird, und
      - für den Fall, dass keine weitere Folge durchgeführt wird und keine Pose für das Messgerät definiert ist, das Verfahren abgebrochen wird, ohne dass eine Pose für das Messgerät berechnet wurde.

Die Durchführung des erfindungsgemäßen Verfahrens zum Berechnen der Pose des Messgerätes im Bezugssystem des Geometriemodells wird vom Mikrocontroller gesteuert. Der Mikrocontroller ist über eine Kommunikationsverbindung mit dem Messgerät kommunizierend verbunden und weist einen Algorithmus zum Berechnen der Pose des Messgerätes auf. Das Messgerät ist in einer Messumgebung, die mehrere Begrenzungsflächen aufweist, aufgestellt und weist eine Distanzmesseinrichtung mit einem Messstrahl und mindestens eine Winkelmesseinrichtung auf.

Zu Beginn des erfindungsgemäßen Verfahrens wird aus dem Geometriemodell eine Polylinie, die den horizontalen Verlauf der Begrenzungsflächen senkrecht zur Gravitationsrichtung darstellt und die mindestens drei Linienabschnitte umfasst, erstellt.

Im einem weiteren Schritt des erfindungsgemäßen Verfahrens werden mindestens vier verschiedene Messungen mit dem Messgerät in verschiedenen Orientierungen ausgeführt, wobei der Messstrahl auf mindestens zwei verschiedene Begrenzungsflächen der Messumgebung auftrifft und in jeder Orientierung einen Messpunkt definiert. Zu jedem Messpunkt werden ein Horizontalwinkel und eine Horizontaldistanz zwischen dem Messpunkt und dem Messgerät als Messwerte bestimmt. Die Genauigkeit bzw. Qualität, mit der die Pose des Messgerätes bestimmt werden kann, kann mit steigender Anzahl an Messpunkten und mit steigender Anzahl an Begrenzungsflächen, die für die Messungen verwendet werden, erhöht werden.

Im nächsten Schritt des erfindungsgemäßen Verfahrens wird der Algorithmus zum Berechnen der Pose des Messgerätes ausgeführt. Der Algorithmus umfasst eine Folge von mindestens drei Schritten, die aus einem ersten, zweiten, dritten, vierten, fünften und sechsten Schritt ausgewählt sind; die Folge kann einfach oder mehrfach ausgeführt werden.

Im ersten Schritt der Folge werden drei Messpunkte der N Messpunkte und drei Linienabschnitte der Polylinie ausgewählt und für den Fall, dass vor dem Start des Algorithmus keine Zuordnung zwischen Messpunkten und Linienabschnitten durchgeführt wurde, werden die ausgewählten drei Messpunkte und ausgewählten drei Linienabschnitte einander zugeordnet.

Im zweiten Schritt der Folge wird mittels der Messwerte der ausgewählten drei Messpunkte und der Koordinaten der ausgewählten drei Linienabschnitte die Anzahl der möglichen Lösungen für die Pose des Messgerätes bestimmt. Für den Fall, dass eine Lösung oder zwei Lösungen existieren, werden die Messkoordinaten von mindestens zwei der ausgewählten drei Messpunkte im Bezugssystem des Geometriemodells bestimmt.

Im dritten Schritt der Folge wird abhängig von der Anzahl der Lösungen, die im zweiten Schritt der Folge bestimmt wurde, zwischen drei Fällen unterschieden: Keine Lösung (Null), eine Lösung (Eins) oder zwei Lösungen (Zwei):
▪ Für den Fall, dass im zweiten Schritt der Folge keine Lösung bestimmt wurde, wird das erfindungsgemäße Verfahren mit dem sechsten Schritt der Folge fortgesetzt.
▪ Für den Fall, dass im zweiten Schritt der Folge eine Lösung bestimmt wurde, wird aus den Messkoordinaten und Messwerten eine Zwischenpose für das Messgerät berechnet, diejenigen Messpunkte der N Messpunkte, die ein vorgegebenes Qualitäts-Kriterium erfüllen, werden als qualifizierte Messpunkte bestimmt und das erfindungsgemäße Verfahren wird mit dem fünften Schritt der Folge fortgesetzt.
▪ Für den Fall, dass im zweiten Schritt der Folge zwei Lösungen bestimmt wurden, werden aus den Messkoordinaten und Messwerten eine erste Testpose (erste Lösung) und zweite Testpose (zweite Lösung) berechnet, für die erste Testpose und zweite Testpose werden jeweils diejenigen Messpunkte der N Messpunkte, die ein vorgegebenes Qualitäts-Kriterium erfüllen, als erste qualifizierte Messpunkte bzw. zweite qualifizierte Messpunkte bestimmt und das erfindungsgemäße Verfahren wird mit dem vierten Schritt der Folge fortgesetzt.

Der vierte Schritt der Folge wird nur durchgeführt, wenn im zweiten Schritt der Folge zwei Lösungen bestimmt wurden. Die beiden Lösungen, die als erste Testpose und zweite Testpose bezeichnet werden, müssen miteinander verglichen werden. Im vierten Schritt der Folge werden die erste Testpose und zweite Testpose vom Mikrocontroller anhand eines vorgegebenen Vergleichs-Kriteriums hinsichtlich ihrer Eignung verglichen, wobei zwei Fälle unterschieden werden. Für den Fall, dass eine der ersten Testpose und zweiten Testpose als besser geeignet bewertet wird, wird diese Testpose als Zwischenpose definiert und das erfindungsgemäße Verfahren wird mit dem fünften Schritt der Folge fortgesetzt. Für den Fall, dass keine der ersten Testpose und zweiten Testpose als besser geeignet bewertet wird, wird das erfindungsgemäße Verfahren mit dem sechsten Schritt der Folge fortgesetzt.

Der fünfte Schritt der Folge dient dazu, die Zwischenpose, die im dritten Schritt oder vierten Schritt der Folge bestimmt wurde, weiterzuverarbeiten. Im fünften Schritt der Folge werden zwei Fälle unterschieden:
▪ Für den Fall, dass im Rahmen des erfindungsgemäßen Verfahrens keine Pose für das Messgerät gespeichert ist, wird die Zwischenpose als Pose für das Messgerät definiert oder mithilfe der qualifizierten Messpunkte wird eine aktualisierte Pose berechnet und als Pose für das Messgerät definiert.
▪ Für den Fall, dass im Rahmen des erfindungsgemäßen Verfahrens eine Pose für das Messgerät gespeichert ist, wird die Zwischenpose anhand eines vorgegebenen weiteren Vergleichs-Kriteriums mit der gespeicherten Pose verglichen. Wird die Zwischenpose als besser geeignet bewertet, wird die Zwischenpose als Pose definiert oder mithilfe der qualifizierten Messpunkte wird eine aktualisierte Pose berechnet und als Pose für das Messgerät definiert; das erfindungsgemäße Verfahren wird mit dem sechsten Schritt der Folge fortgesetzt. Wird die Zwischenpose als nicht besser geeignet bewertet, wird das erfindungsgemäße Verfahren mit dem sechsten Schritt der Folge fortgesetzt.

Im sechsten Schritt der Folge wird anhand eines vorgegebenen Abbruch-Kriteriums entschieden, ob eine weitere Folge des ersten bis sechsten Schrittes durchgeführt wird, wobei drei Fälle unterschieden werden. Für den Fall, dass eine weitere Folge durchgeführt wird, wird das erfindungsgemäße Verfahren mit dem ersten Schritt der Folge fortgesetzt. Für den Fall, dass keine weitere Folge durchgeführt wird und eine Pose für das Messgerät definiert ist, wird das erfindungsgemäße Verfahren beendet. Für den Fall, dass keine weitere Folge durchgeführt wird und keine Pose für das Messgerät definiert ist, wird das erfindungsgemäße Verfahren abgebrochen, ohne dass eine Pose für das Messgerät bestimmt wurde.

Bevorzugt wird im dritten Schritt der Folge als Qualitäts-Kriterium mindestens eines der folgenden Kriterien verwendet: Maximalabstand des Messpunktes zur Polylinie, eindeutige Zuordnung des Messpunktes zu einem Linienabschnitt der Polylinie und maximaler Auftreffwinkel des Messstrahls zum Linienabschnitt der Polylinie. Ein Messpunkt wird im dritten Schritt als qualifizierter Messpunkt bezeichnet, wenn der Abstand zur Polylinie kleiner als ein Maximalabstand ist und/oder der Messpunkt eindeutig einem Linienabschnitt der Polylinie zugeordnet werden kann und/oder der Auftreffwinkel des Messstrahls zum zugeordneten Linienabschnitt kleiner als ein maximaler Auftreffwinkel ist, wobei der Auftreffwinkel zum Normalenvektor der zugeordneten Begrenzungsfläche gemessen.

Bevorzugt wird im vierten Schritt der Folge als Vergleichs-Kriterium mindestens eines der folgenden Kriterien verwendet: Anzahl der qualifizierten Messpunkte, Verteilung der qualifizierten Messpunkte entlang der Polylinie, Flächeninhalt der von den qualifizierten Messpunkten aufgespannten Fläche und geschätzte Genauigkeit einer Testpose. Eine Testpose wird im vierten Schritt als besser geeignet bewertet, wenn ihre Anzahl der qualifizierten Messpunkte grösser ist und/oder ihre qualifizierten Messpunkte über mehr Linienabschnitte der Polylinie verteilt sind und/oder der Flächeninhalt der von ihren qualifizierten Messpunkten aufgespannten Fläche grösser ist und/oder ihre geschätzte Genauigkeit grösser ist.

Bevorzugt wird im fünften Schritt der Folge als weiteres Vergleichs-Kriterium mindestens eines der folgenden Kriterien verwendet: Anzahl der qualifizierten Messpunkte, Verteilung der qualifizierten Messpunkte entlang der Polylinie, Flächeninhalt der von den qualifizierten Messpunkten aufgespannten Fläche und geschätzte Genauigkeit einer Pose. Die Zwischenpose wird im fünften Schritt als besser geeignet bewertet, wenn ihre Anzahl der qualifizierten Messpunkte grösser ist und/oder ihre qualifizierten Messpunkte über mehr Linienabschnitte der Polylinie verteilt sind und/oder der Flächeninhalt der von ihren qualifizierten Messpunkten aufgespannten Fläche grösser ist und/oder ihre geschätzte Genauigkeit grösser ist.

Bevorzugt wird im sechsten Schritt der Folge als Abbruch-Kriterium mindestens eines der folgenden Kriterien verwendet: Mindestanzahl M an Folgen, Mindestanzahl an qualifizierten Messpunkten, prozentualer Mindestwert der Anzahl der qualifizierten Messpunkte zur Anzahl der Messpunkte, absoluter Mindestwert für den Flächeninhalt der von den qualifizierten Messpunkten aufgespannten Fläche und ein prozentualer Mindestwert vom Flächeninhalt der von den qualifizierten Messpunkten aufgespannten Fläche zum Flächeninhalt des Polygons, das von der Polygonlinie umgeben ist.

Die Folge wird beendet, wenn eine Mindestanzahl M an Folgen erreicht ist und/oder die Anzahl der qualifizierten Messpunkte grösser als eine Mindestanzahl ist und/oder das Verhältnis zwischen der Anzahl der qualifizierten Messpunkte und der Anzahl der Messpunkte grösser als ein prozentualer Mindestwert ist und/oder der Flächeninhalt der von den qualifizierten Messpunkten aufgespannten Fläche grösser als ein absoluter Mindestwert ist und/oder das Verhältnis zwischen dem Flächeninhalt der von den qualifizierten Messpunkten aufgespannten Fläche und dem Flächeninhalt des Polygons grösser als ein prozentualer Mindestwert ist.

Bevorzugt werden beim Erstellen der Polylinie unerlaubte Messbereiche definiert, wobei die den unerlaubten Messbereichen zugeordneten Linienabschnitte der Polylinie als unerlaubte Linienabschnitte definiert und von der Auswahl der drei Linienabschnitte im ersten Schritt der Folge ausgeschlossen werden.

Besonders bevorzugt wird mindestens einer der folgenden Messbereiche als unerlaubter Messbereich definiert: Fensteröffnung, Türöffnung, Glasscheibe, Bereich, in dem das Geometriemodell von der Messumgebung abweicht, und Bereich, der für die Messung unzugänglich oder ungeeignet ist.

Besonders bevorzugt wird im dritten Schritt der Folge als Qualitäts-Kriterium die Zuordnung zu einem Linienabschnitt, der von einem unerlaubten Linienabschnitt verschieden ist, verwendet.

In einer ersten bevorzugten Variante werden die N Messungen mit dem Messgerät manuell von einem Bediener ausgeführt und die Messpunkte werden vom Bediener den Linienabschnitten der Polylinie zugeordnet. Die erste Variante wird als manuelle Variante bezeichnet, bei der die Messungen und die Zuordnung vom Bediener durchgeführt werden.

In einer zweiten bevorzugten Variante werden die N Messungen mit dem Messgerät vom Mikrocontroller ausgeführt und die Messpunkte werden vom Bediener den Linienabschnitten der Polylinie zugeordnet. Die zweite Variante wird als halbmanuelle Variante bezeichnet, bei der die Messungen automatisch durchgeführt werden und die Zuordnung vom Bediener durchgeführt wird.

In einer dritten bevorzugten Variante werden die N Messungen mit dem Messgerät manuell von einem Bediener ausgeführt und die im ersten Schritt der Folge vorzunehmende Zuordnung wird vom Mikrocontroller zufällig oder mithilfe eines Auswahl-Kriteriums vorgenommen. Die dritte Variante wird als halbautomatische Variante bezeichnet, bei der die Messungen vom Bediener durchgeführt werden und die Zuordnung vom Mikrocontroller durchgeführt wird.

In einer vierten bevorzugten Variante werden die N Messungen mit dem Messgerät vom Mikrocontroller ausgeführt und die im ersten Schritt der Folge vorzunehmende Zuordnung wird vom Mikrocontroller zufällig oder mithilfe eines Auswahl-Kriteriums vorgenommen. Die vierte Variante wird als vollautomatische Variante bezeichnet, bei der die Messungen und die Zuordnung vom Mikrocontroller durchgeführt wird.

Besonders bevorzugt wird als Auswahl-Kriterium mindestens eines der folgenden Kriterien verwendet: Reihenfolge der Linienabschnitte in der Drehrichtung des Messgerätes, Länge der Linienabschnitte und Abstände der Messpunkte zur Polylinie, wobei die Abstände mithilfe der Messwerte und einer Startpose für das Messgerät berechnet werden.

Besonders bevorzugt weist das Messgerät eine Kameraeinrichtung auf und in jeder der N Orientierungen des Messgerätes wird von der Kameraeinrichtung ein Kamerabild erstellt, wobei das Kamerabild der jeweiligen Orientierung des Messgerätes zugeordnet wird.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein Messgerät, das in einer Messumgebung aufgestellt und über eine Kommunikationsverbindung mit einem Bediencontroller verbunden ist;
- FIGN. 2A, B: das Messgerät der FIG. 1 in einer 3D-Ansicht (FIG. 2A) und einen schematischen Aufbau des Messgerätes in einem Blockdiagramm (FIG. 2B);
- FIGN. 3A, B: den Bediencontroller der FIG. 1 in einer Draufsicht auf eine Vorderseite (FIG. 3A) und einen schematischen Aufbau des Bediencontrollers in einem Blockdiagramm (FIG. 3B);
- FIG. 4: die Durchführung von mehreren Messungen mit dem Messgerät auf verschiedene Begrenzungsflächen der Messumgebung;
- FIG. 5: einen Screenshot des Bediencontrollers, der zeigt, wie aus dem Geometriemodell der Messumgebung eine Polylinie erstellt wird;
- FIGN. 6A,: B ein erfindungsgemäßes Verfahren zum Berechnen der Pose eines Messgerätes in Form eines Ablaufdiagramms; und
- FIG. 7: einen Screenshot des Bediencontrollers, der zeigt, wie aus dem Geometriemodell eine Polylinie mit einem unerlaubten Messbereich erstellt wird.

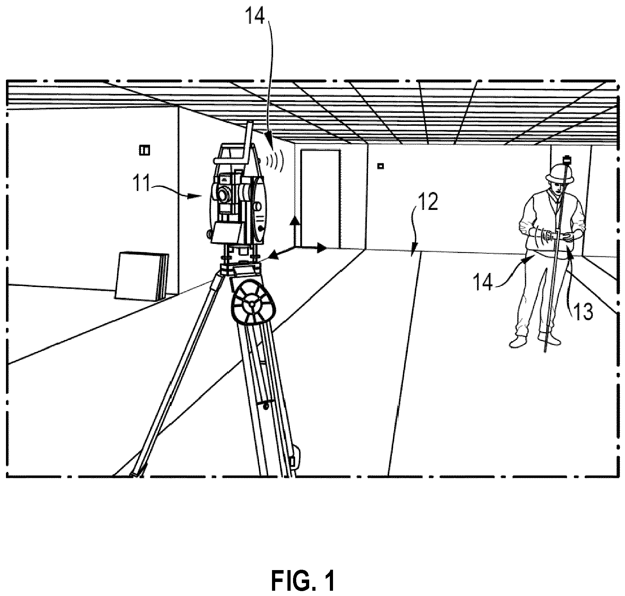

**FIG. 1** zeigt ein Messgerät **11**, dessen Position und Orientierung (Pose) in einer Messumgebung **12** mithilfe eines erfindungsgemäßen Verfahrens bestimmt werden soll, und einen Bediencontroller **13.** Unter dem Begriff "Messgerät" werden sämtliche Geräte zusammengefasst, die für die Durchführung von Messaufgaben vorgesehen sind. Das Messgerät 11, das im Ausführungsbeispiel als Totalstation ausgebildet ist, kann über eine Kommunikationsverbindung **14** mit dem Bediencontroller 13 verbunden werden.

Die Messumgebung 12 ist in einem Geometriemodell abgebildet. Als Geometriemodell kann ein mit CAD-Unterstützung hergestelltes Konstruktionsmodell der Messumgebung 12 verwendet werden. Alternativ kann die Messumgebung 12 mithilfe eines Laserscanners abgescannt werden aus den Scandaten ein Geometriemodell der Messumgebung 12 erstellt werden. Das Geometriemodell kann die Messumgebung 12 vollständig oder nur teilweise abbilden. Für die vorliegende Anmeldung sind die Oberflächen der Messumgebung 12 maßgeblich, die als Reflektionsfläche oder Streufläche für eine Distanzmessung verwendet werden.

Die Pose des Messgerätes 11 wird mithilfe eines erfindungsgemäßen Verfahrens im Bezugssystem des Geometriemodells berechnet. Das erfindungsgemäße Verfahren nutzt die Messwerte von mindestens vier Messpunkten, die mithilfe des Messgerätes 11 bestimmt werden, und den horizontalen Verlauf der Begrenzungsflächen, der als Polylinie bezeichnet wird.

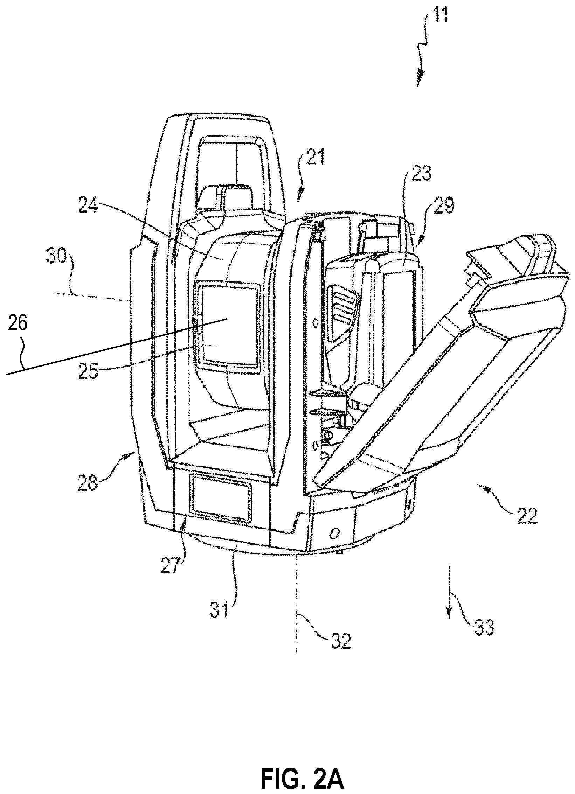

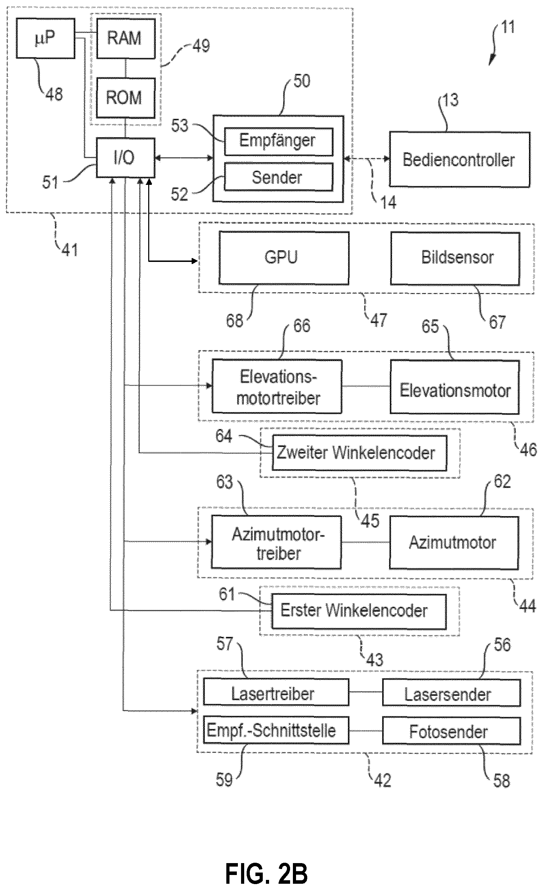

**FIGN. 2A****, B** zeigen das Messgerät 11 der FIG. 1 in einer 3D-Ansicht (FIG. 2A) und in einem schematischen Aufbau in Form eines Blockdiagramms (FIG. 2B).

Das Messgerät 11 ist als Totalstation ausgebildet und weist einen Messkopf **21,** ein Hauptgehäuse **22** und eine wiederaufladbare Batterie **23** auf. Der Messkopf 21 umfasst ein Gehäuse **24** mit einem Austrittsfenster **25** und eine im Gehäuse 24 angeordnete Distanzmesseinrichtung, die einen Messstrahl **26** aussendet. Der Messstrahl 26 verlässt das Gehäuse 24 durch das Austrittsfenster 25 und kann auf einer Begrenzungsfläche der Messumgebung Messpunkte erzeugen.

Das Hauptgehäuse 22 ist U-förmig ausgebildet und umfasst ein Grundgehäuse **27,** ein erstes Seitenteil **28** und ein zweites Seitenteil **29.** Der Messkopf 21 ist zwischen dem ersten Seitenteil 28 und zweiten Seitenteil 29 angeordnet und um eine Schwenkachse **30** schwenkbar ausgebildet. Das Hauptgehäuse 22 ist gegenüber einer Drehplattform **31** um eine Drehachse **32** drehbar ausgebildet.

Im Grundgehäuse 27 sind eine Azimut-Motoreinrichtung und eine erste Winkelmesseinrichtung angeordnet; die Azimut-Motoreinrichtung ermöglicht, das Hauptgehäuse 22 um die Drehachse 32 zu bewegen, und die erste Winkelmesseinrichtung ermöglicht, die Richtung des Messstrahls 26 in einer horizontalen Ebene zu bestimmen. Im ersten Seitenteil 28 sind eine Elevations-Motoreinrichtung und eine zweite Winkelmesseinrichtung angeordnet; die Elevations-Motoreinrichtung ermöglicht den Messkopf 21 um die Schwenkachse 30 zu bewegen, und die zweite Winkelmesseinrichtung ermöglicht, die Richtung des Messstrahls 26 in einer Vertikalebene zu bestimmen. Um das Messgerät 11 vollautomatisch auszubilden, kann im Grundgehäuse 27 eine Nivelliereinrichtung vorgesehen sein, die ermöglicht, das Messgerät 11 zu nivellieren, so dass die Drehachse 32 parallel zu einer Gravitationsrichtung **33** verläuft.

FIG. 2B zeigt den schematischen Aufbau des Messgerätes 11 als Blockdiagramm. Das Messgerät 11 weist eine Elektronikeinrichtung **41,** eine Distanzmesseinrichtung **42,** eine erste Winkelmesseinrichtung **43** zur Messung eines Azimut-Winkels, eine Azimut-Motoreinrichtung **44,** eine zweite Winkelmesseinrichtung **45** zur Messung eines Elevations-Winkels, eine Elevations-Motoreinrichtung **46** und eine Kameraeinrichtung **47** auf.

Die Elektronikeinrichtung 41 umfasst einen Mikrocontroller **48,** eine Speicherschaltung **49,** die einen Direktzugriffsspeicher (RAM) und einen Festwertspeicher (ROM) aufweisen kann, eine Kommunikationsschaltung **50** und eine I/O-Schnittstelle **51.** Der Mikrocontroller 48 kann mit der Speicherschaltung 49 und der Kommunikationsschaltung 50 kommunizieren und ist für die Steuerung und Regelung des Messgerätes 11 ausgebildet.

Die Kommunikationsschaltung 50 weist einen Sender **52** und einen Empfänger **53** auf und ist für die Kommunikation und den Austausch von Dateninformationen, z.B. Distanzmesswerte, Azimut-Winkelwerte und Elevations-Winkelwerte, mit dem Bediencontroller 13 ausgelegt, typischerweise unter Verwendung eines drahtlosen Signals. In einer bevorzugten Ausführungsform ist die Kommunikationsverbindung 14 drahtlos, obwohl ein Kabel zwischen der Kommunikationsschaltung 50 und dem Bediencontroller 13 angeschlossen werden könnte. Die I/O-Schnittstelle 51 ist eine Schnittstelle zwischen dem Mikrocontroller 48 und den verschiedenen Arten von Treibern und Sensoren.

Die Distanzmesseinrichtung 42 umfasst einen Lasersender **56,** der den Messstrahl 26 erzeugt, einen Lasertreiber **57,** der den Lasersender 56 mit Strom versorgt, einen Fotosensor **58** und eine Empfänger-Schnittstelle **59.** Der Fotosensor 58 empfängt zumindest einen Teil des Messstrahls 26, der an einer Begrenzungsfläche reflektiert wird, und das vom Fotosensor 58 ausgegebene Stromsignal wird an die Empfänger-Schnittstelle 59 geleitet. Nach Verstärkung und Demodulation wird das Signal von der Empfänger-Schnittstelle 59 über die I/O-Schnittstelle 51 an den Mikrocontroller 48 gesendet.

Die erste Winkelmesseinrichtung 43 umfasst einen ersten Winkelencoder **61,** der die Richtung des Lasersenders 56 in der horizontalen Ebene (Azimutwinkel) bestimmt und in ein elektrisches Ausgangssignal umwandelt, das über die I/O-Schnittstelle 51 an den Mikrocontroller 48 gesendet wird. Die Azimut-Motoreinrichtung 44 umfasst einen Azimutmotor **62,** der das Hauptgehäuse 22 des Messgerätes 11 um die Drehachse 32 bewegt, und einen Azimutmotortreiber **63,** der die Befehle des Mikrocontrollers 48 in die benötigen Stromstärken des Azimutmotors 62 umwandelt.

Die zweite Winkelmesseinrichtung 45 umfasst einen zweiten Winkelencoder **64,** der die Richtung des Lasersenders 56 in der vertikalen Ebene (Elevationswinkel) bestimmt und in ein elektrisches Ausgangssignal umwandelt, das über die I/O-Schnittstelle 51 an den Mikrocontroller 48 gesendet wird. Die Elevations-Motoreinrichtung 46 umfasst einen Elevationsmotor **65,** der den Messkopf 21 um die Schwenkachse 30 bewegt, und einen Elevationsmotortreiber **66,** der die Befehle des Mikrocontrollers 48 in die benötigen Stromstärken des Elevationsmotors 65 umwandelt.

Die Kameraeinrichtung 47 umfasst einen Bildsensor **67** und einen Graphikprozessor (GPU) **68,** der für die Berechnung von Bildinformationen zuständig ist.

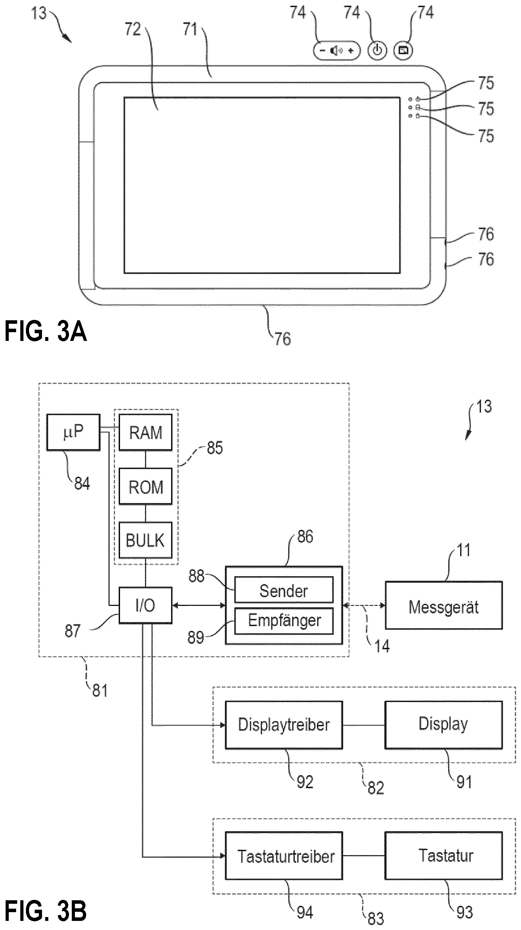

**FIGN. 3A****, B** zeigen den Bediencontroller 13 der FIG. 1 in einer Draufsicht auf eine Vorderseite (FIG. 3A) und einen schematischen Aufbau des Bediencontrollers 13 in einem Blockdiagramm (FIG. 3B).

Der Bediencontroller 13 ist als Tablet-Computer ausgeführt und umfasst ein Gehäuse **71,** einen Touchscreen **72,** eine Batterie **73,** mehrere Tasten **74,** z. B. Lautstärkeregelungstaste, Ein-/Ausschalttaste und Display-Steuerungstaste, mehrere Anzeigen **75,** z. B. für Betriebsstatus, Datenspeicherstatus und Batteriestatus, mehrere Anschlüsse **76,** z. B. für Docking, Datenspeicherung und USB, und einen Kartensteckplatz **77.**

FIG. 3B zeigt den schematischen Aufbau des Bediencontrollers 13 als Blockdiagramm. Der Bediencontroller 13 umfasst eine Elektronikeinrichtung **81,** eine Anzeigeeinrichtung **82** und eine benutzerbetätigte Eingabeeinrichtung **83.**

Die Elektronikeinrichtung 81 umfasst einen Mikrocontroller **84,** eine Speicherschaltung **85,** die einen Direktzugriffsspeicher (RAM), einen Festwertspeicher (ROM) und einen Massenspeicher (BULK) umfassen kann, eine Kommunikationsschaltung **86** und eine I/O-Schnittstelle **87.** Der Mikrocontroller 84 kann mit der Speicherschaltung 85 und der Kommunikationsschaltung 86 kommunizieren und ist für die Steuerung und Regelung des Bediencontrollers 13 ausgebildet. Der Massenspeicher könnte eine SD-Karte sein, die in den Kartensteckplatz 77 eingesteckt werden kann, oder ein externes Speichergerät, das über einen der Anschlüsse 76, z. B. einen USB-Anschluss, an den Bediencontroller 13 angeschlossen werden kann.

Die Kommunikationsschaltung 86 weist einen Sender **88** und einen Empfänger **89** auf und ist für die Kommunikation mit dem Messgerät 11 ausgelegt, typischerweise unter Verwendung eines drahtlosen Signals. Das Messgerät 11 übermittelt Distanzmesswerte, Azimut-Winkelwerte und Elevations-Winkelwerte über die Kommunikationsverbindung 14 an den Bediencontroller 13.

Die Anzeigeeinrichtung 82 umfasst eine Anzeige **91** und eine Anzeigetreiberschaltung **92,** die in Verbindung mit der I/O-Schnittstelle 87 steht und die richtigen Schnittstellen- und Datensignale für die Anzeige 91 bereitstellt. Die benutzergesteuerte Eingabeeinrichtung 83 umfasst ein Tastatur **93** und einen Tastaturtreiber **94,** der mit der I/O-Schnittstelle 87 in Verbindung steht und die richtigen Schnittstellen- und Datensignale für die Tastatur 93 bereitstellt.

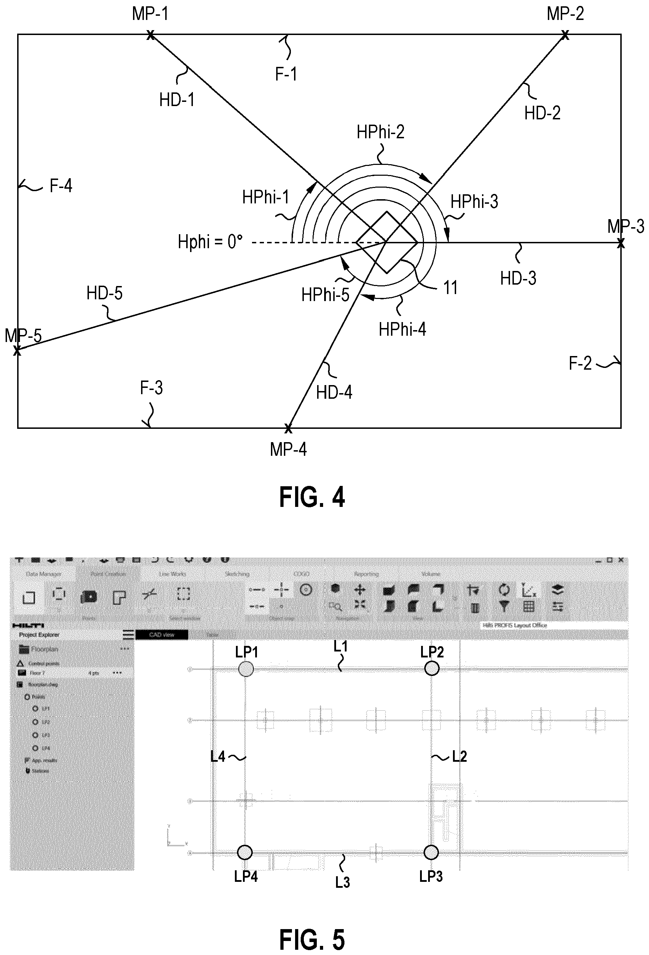

**FIG. 4** zeigt die Durchführung von mehreren Messungen mit dem Messgerät 11 auf verschiedenen Begrenzungsflächen der Messumgebung 12 in schematischer Form. Die Messumgebung 12 weist vier Wände auf, die vier Begrenzungsflächen **F-1, F-2, F-3, F-3** bilden.

Das Messgerät 11 wird in einer ersten Orientierung ausgerichtet und der Messstrahl 26 erzeugt einen ersten Messpunkt **MP-1** auf der ersten Begrenzungsfläche F-1. Für den ersten Messpunkt MP-1 werden mittels einer Distanz- und Winkelmessung Distanz- und Winkelwerte bestimmt. Das erfindungsgemäße Verfahren benötigt die Distanz- und Winkelwerte in einer Horizontalebene senkrecht zur Gravitationsrichtung 33, die im Folgenden als Horizontaldistanz und Horizontalwinkel bezeichnet werden.

Um den Horizontalwinkel und die Horizontaldistanz zu erhalten, kann das Messgerät 11 vor Beginn der Messung mittels der Nivelliereinrichtung 47 nivelliert werden, so dass die gemessenen Distanz- und Winkelwerte dem Horizontalwinkel und der Horizontaldistanz entsprechen, oder das Messgerät 11 misst dreidimensionale Werte und leitet den Horizontalwinkel und die Horizontaldistanz daraus ab. Für den ersten Messpunkt MP-1 werden ein erster Horizontalwinkel **HPhi-1** und eine erste Horizontaldistanz **HD-1** als erste Messwerte bestimmt.

Das Messgerät 11 wird aus der ersten Orientierung in eine zweite Orientierung versetzt und der Messstrahl 26 wird auf einen zweiten Messpunkt **MP-2** ausgerichtet, für den ein zweiter Horizontalwinkel **HPhi-2** und eine zweite Horizontaldistanz **HD-2** als zweite Messwerte bestimmt werden. Das Messgerät 11 wird aus der zweiten Orientierung in eine dritte Orientierung versetzt und der Messstrahl 26 wird auf einen dritten Messpunkt **MP-3** ausgerichtet, für den ein dritter Horizontalwinkel **HPhi-3** und eine dritte Horizontaldistanz **HD-3** als dritte Messwerte bestimmt werden. Das Messgerät 11 wird aus der dritten Orientierung in eine vierte Orientierung versetzt und der Messstrahl 26 wird auf einen vierten Messpunkt **MP-4** ausgerichtet, für den ein vierter Horizontalwinkel **HPhi-4** und eine vierte Horizontaldistanz **HD-4** als vierte Messwerte bestimmt werden.

Für das erfindungsgemäße Verfahren müssen die Messpunkte auf mindestens zwei verschiedenen Begrenzungsflächen angeordnet sein. Im Ausführungsbeispiel liegen der erste und zweite Messpunkt MP-1, MP-2 auf der ersten Begrenzungsfläche F-1, der dritte Messpunkt MP-3 auf der zweiten Begrenzungsfläche F-2 und der vierte Messpunkt MP-4 auf der dritten Begrenzungsfläche F-3, so dass die vier Messpunkte, MP-1, MP-2, MP-3, MP-4 auf drei verschiedenen Begrenzungsflächen angeordnet sind.

Um die Genauigkeit zu erhöhen, mit der die Pose des Messgerätes 11 berechnet werden kann, ist es vorteilhaft, die Messpunkte auf möglichst viele Begrenzungsflächen der Messumgebung 12 auszurichten und möglichst gleichmäßig über den Raumwinkel zu verteilen. Dazu kann das Messgerät 11 in eine fünfte Orientierung versetzt werden und der Messstrahl 26 auf einen fünften Messpunkt **MP-5** ausgerichtet werden, der auf der vierten Begrenzungsfläche F-4 liegt und für den ein fünfter Horizontalwinkel **HPhi-5** und eine fünfte Horizontaldistanz **HD-5** als fünfte Messwerte bestimmt werden.

**FIG. 5** zeigt einen Screenshot des Bediencontrollers 13, der zeigt, wie aus dem Geometriemodell eine Polylinie erstellt wird. Das Geometriemodell, das die Messumgebung 12 abbildet, wird vom Mikrocontroller 84 geladen und auf dem Display 91 wird eine 2D-Ansicht angezeigt.

Der Bediener bestimmt einen ersten Punkt **LP1,** einen zweiten Punkt **LP2,** einen dritten Punkt **LP3** und einen vierten Punkt **LP4,** die die Eckpunkte darstellen. Der Mikrocontroller 84 definiert eine Linie zwischen dem ersten Punkt LP1 und zweiten Punkt LP2 als ersten Linienabschnitt **L1,** eine Linie zwischen dem zweiten Punkt LP2 und dritten Punkt LP3 als zweiten Linienabschnitt **L2,** eine Linie zwischen dem dritten Punkt LP3 und vierten Punkt LP4 als dritten Linienabschnitt **L3** und eine Linie zwischen dem vierten Punkt LP4 und ersten Punkt LP1 als vierten Linienabschnitt **L4.** Die Polylinie wird gebildet aus dem ersten Linienabschnitt L1, dem zweiten Linienabschnitt L2, dem dritten Linienabschnitt L3 und dem vierten Linienabschnitt L4.

Der erste Linienabschnitt L1 stellt den horizontalen Verlauf der ersten Begrenzungsfläche F-1 dar, der zweite Linienabschnitt L2 den horizontalen Verlauf der zweiten Begrenzungsfläche F-2, der dritte Linienabschnitt L3 den horizontalen Verlauf der dritten Begrenzungsfläche F-3 und der vierte Linienabschnitt L4 den horizontalen Verlauf der vierten Begrenzungsfläche F-4.

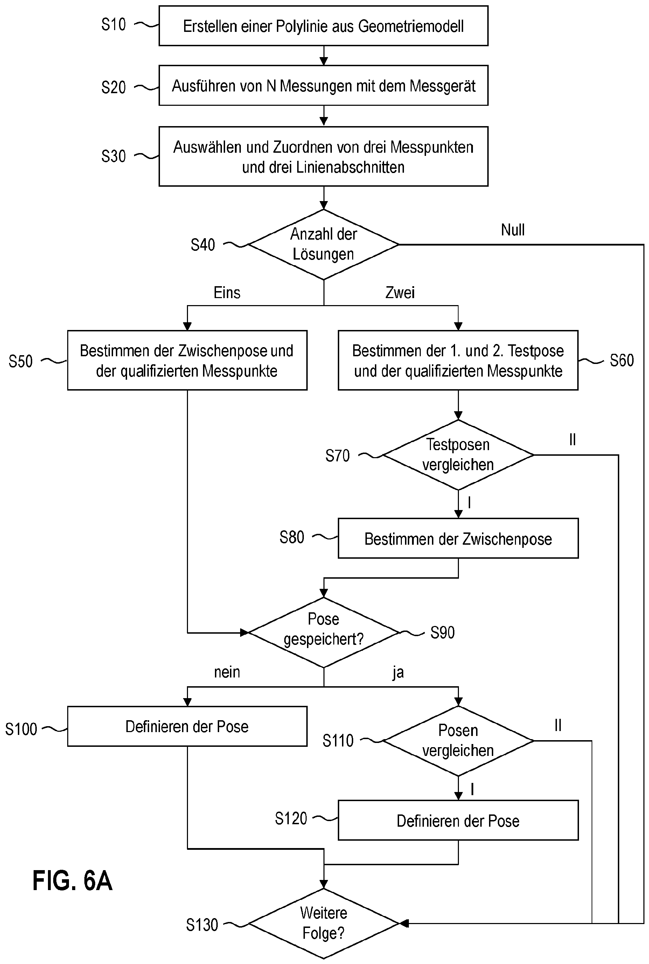

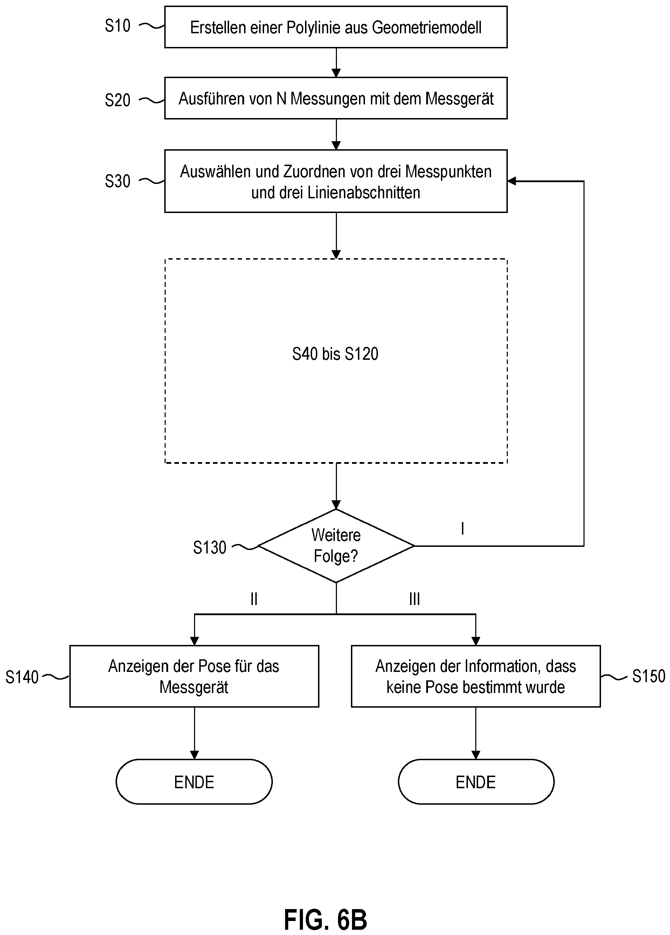

**FIGN. 6A****, B** zeigen das erfindungsgemäße Verfahren zum Berechnen der Pose des Messgerätes in Form eines Ablaufdiagramms. Die Durchführung des erfindungsgemäßen Verfahrens zum Berechnen der Pose des Messgerätes 11 im Bezugssystem des Geometriemodells wird vom Mikrocontroller 84 des Bediencontrollers 13 gesteuert.

Der Mikrocontroller 84 ist über die Kommunikationsschaltung 86 und die Kommunikationsverbindung 14 mit dem Messgerät 11 kommunizierend verbunden und weist einen Algorithmus zum Berechnen der Pose des Messgerätes 11 auf. Um die Pose des Messgerätes 11 mithilfe des Algorithmus berechnen zu können, muss aus dem Geometriemodell der Messumgebung 12 eine Polylinie erstellt werden (siehe FIG. 5) und es müssen mindestens vier verschiedene Messungen mit dem Messgerät 11 ausgeführt werden (siehe FIG. 4).

Das erfindungsgemäße Verfahren hat den Vorteil, dass keine festen Kontrollpunkte verwenden werden müssen, sondern das Messgerät 11 auf sämtliche Begrenzungsflächen der Messumgebung 12 ausgerichtet werden kann. Um die Genauigkeit der Pose zu verbessern, ist es vorteilhaft, die Messpunkte auf möglichst viele Begrenzungsflächen der Messumgebung 12 auszurichten und möglichst gleichmäßig über den Raumwinkel zu verteilen.

Der Bediener erstellt aus dem Geometriemodell eine Polylinie, die den horizontalen Verlauf der Begrenzungsflächen senkrecht zur Gravitationsrichtung 33 darstellt und mindestens drei Linienabschnitte umfasst (Schritt **S10**). Im nächsten Schritt des erfindungsgemäßen Verfahrens werden N, N ≥ 4 verschiedene Messungen mit dem Messgerät 11 ausgeführt (Schritt **S20**).

Bei der in den FIGN. 6A, B gezeigten Variante des erfindungsgemäßen Verfahrens wird zunächst die Polylinie erstellt und anschließend werden mindestens vier Messungen mit dem Messgerät 11 ausgeführt. Alternativ können zunächst die Messungen ausgeführt werden und anschließend wird die Polylinie erstellt oder bei einer automatischen Messung können die beiden Schritte auch gleichzeitig ausgeführt werden.

Die Messungen können manuell vom Benutzer ausgeführt werden oder der Mikrocontroller 84 veranlasst die Durchführung der Messungen. Jede der N Messungen wird in einer anderen Orientierung des Messgerätes 11 ausgeführt. Der Messstrahl 26 der Distanzmesseinrichtung 42 definiert einen Messpunkt auf einer der Begrenzungsflächen der Messumgebung 12. Das Messgerät 11 bestimmt für jeden Messpunkt als Messwerte einen Horizontalwinkel und eine Horizontaldistanz zwischen dem Messpunkt und dem Messgerät 11. Die N verschiedenen Messpunkte müssen so angeordnet sein, dass auf mindestens zwei verschiedenen Begrenzungsflächen der Messumgebung 12 gemessen wird. FIG. 4 zeigt die fünf Messpunkte MP-1, MP-2, MP-3, MP-4 und MP-5, die auf den vier Begrenzungsflächen F-1, F-2, F-3 und F-4 angeordnet sind.

Das erfindungsgemäße Verfahren wird durch Ausführen des Algorithmus zum Berechnen der Pose fortgesetzt, wobei der Algorithmus eine Folge von mindestens drei Schritten umfasst und die Schritte aus einem ersten Schritt, zweiten Schritt, dritten Schritt, vierten Schritt, fünften Schritt und sechsten Schritt ausgewählt sind.

Im ersten Schritt der Folge werden drei Messpunkte der N Messpunkte und drei Linienabschnitte der Polylinie ausgewählt und für den Fall, dass vor dem Start des Algorithmus keine Zuordnung zwischen Messpunkten und Linienabschnitten durchgeführt wurde, werden die ausgewählten drei Messpunkte und ausgewählten drei Linienabschnitte einander zugeordnet (Schritt **S30**).

Im zweiten Schritt der Folge wird mittels der Messwerte der ausgewählten drei Messpunkte und der Koordinaten der ausgewählten drei Linienabschnitte die Anzahl der möglichen Lösungen für die Pose des Messgerätes 11 bestimmt (Schritt **S40**). Für den Fall, dass eine Lösung oder zwei Lösungen existieren, werden Messkoordinaten von mindestens zwei der ausgewählten drei Messpunkte im Bezugssystem des Geometriemodells bestimmt. Die Messkoordinaten werden im weiteren Verlauf des Verfahrens zur Berechnung einer Zwischenpose benötigt.

Im dritten Schritt der Folge wird zwischen drei Fällen unterschieden: Keine Lösung, eine Lösung und zwei Lösungen. Für den Fall, dass im zweiten Schritt der Folge keine Lösung bestimmt wurde (Null in S40), wird das erfindungsgemäße Verfahren mit dem sechsten Schritt der Folge fortgesetzt. Für den Fall, dass im zweiten Schritt der Folge eine Lösung bestimmt wurde (Eins in S40), wird aus den Messkoordinaten und Messwerten eine Zwischenpose für das Messgerät berechnet und diejenigen Messpunkte der N Messpunkte, die ein vorgegebenes Qualitäts-Kriterium erfüllen, werden als qualifizierte Messpunkte bestimmt (Schritt **S50**); das erfindungsgemäße Verfahren wird mit dem fünften Schritt der Folge fortgesetzt. Für den Fall, dass im zweiten Schritt der Folge zwei Lösungen bestimmt wurden (Zwei in S40), werden aus den Messkoordinaten und Messwerten eine erste Testpose und zweite Testpose berechnet und für die erste Testpose und zweite Testpose werden jeweils diejenigen Messpunkte der N Messpunkte, die ein vorgegebenes Qualitäts-Kriterium erfüllen, als erste qualifizierte Messpunkte bzw. zweite qualifizierte Messpunkte bestimmt (Schritt **S60**); das erfindungsgemäße Verfahren wird mit dem vierten Schritt der Folge fortgesetzt.

Die in Schritt S50 bestimmte Zwischenpose stellt eine Pose (Position und Orientierung) des Messgerätes 11 dar, die im weiteren Verlauf des erfindungsgemäßen Verfahrens bewertet wird. Die in Schritt S60 bestimmte erste und zweite Testpose stellen eine Pose (Position und Orientierung) des Messgerätes 11 dar, die im weiteren Verlauf des erfindungsgemäßen Verfahrens miteinander verglichen werden. Die Verwendung der Begriffe "Zwischenpose", "erste Testpose" und "zweite Testpose" ermöglicht eine sprachliche Unterscheidung zwischen den mathematischen Lösungen.

Als Qualitäts-Kriterium, mit dem die qualifizierten Messpunkte in Schritt S50 oder Schritt S60 bestimmt werden können, wird mindestens eines der folgenden Kriterien verwendet: Maximalabstand des Messpunktes zur Polylinie, eindeutige Zuordnung des Messpunktes zu einem Linienabschnitt der Polylinie und maximaler Auftreffwinkel des Messstrahls zum Linienabschnitt der Polylinie. Für den Fall, dass die Polylinie mindestens einen unerlaubten Linienabschnitt enthält, kann auch die Zuordnung zu einem Linienabschnitt, der von einem unerlaubten Linienabschnitt verschieden ist, verwendet werden.

Der Mikrocontroller 84 wendet für jeden der N Messpunkte das vorgegebene Qualitäts-Kriterium an. Ein Messpunkt wird als qualifizierter Messpunkt bezeichnet, wenn der Abstand zur Polylinie kleiner als ein Maximalabstand ist und/oder der Messpunkt eindeutig einem Linienabschnitt der Polylinie zugeordnet werden kann und/oder der Auftreffwinkel des Messstrahls zum zugeordneten Linienabschnitt kleiner als ein maximaler Auftreffwinkel ist. Dabei wird der Auftreffwinkel zum Normalenvektor der Begrenzungsfläche gemessen.

Der vierte Schritt der Folge wird nur durchgeführt, wenn im zweiten Schritt der Folge zwei Lösungen bestimmt wurden und dient dazu, diese zwei Lösungen, die als erste und zweite Testpose bezeichnet werden, miteinander zu vergleichen. Im vierten Schritt der Folge werden die erste Testpose und zweite Testpose vom Mikrocontroller 84 anhand eines vorgegebenen Vergleichs-Kriteriums hinsichtlich ihrer Eignung verglichen (Schritt **S70**), wobei zwei Fälle unterschieden werden. Für den Fall, dass eine der ersten Testpose und zweiten Testpose als besser geeignet bewertet wird (I in S70), wird diese Testpose als Zwischenpose definiert (Schritt **S80**) und das erfindungsgemäße Verfahren wird mit dem fünften Schritt der Folge fortgesetzt. Für den Fall, dass keine der ersten Testpose und zweiten Testpose als besser geeignet bewertet wird (II in S70), wird das erfindungsgemäße Verfahren mit dem sechsten Schritt der Folge fortgesetzt.

Als Vergleichs-Kriterium, mit dem die erste Testpose und zweite Testpose in Schritt S70 verglichen werden können, wird mindestens eines der folgenden Kriterien verwendet: Anzahl der qualifizierten Messpunkte, Verteilung der qualifizierten Messpunkte entlang der Polylinie, Flächeninhalt der von den qualifizierten Messpunkten aufgespannten Fläche und geschätzte Genauigkeit einer Pose.

Der Mikrocontroller 84 vergleicht die erste Testpose (erste Lösung in S50) und die zweite Testpose (zweite Lösung in S50) anhand des Vergleichs-Kriteriums miteinander. Eine Testpose wird als besser geeignet bewertet, wenn ihre Anzahl der qualifizierten Messpunkte grösser ist und/oder ihre qualifizierten Messpunkte über mehr Linienabschnitte der Polylinie verteilt sind und/oder der Flächeninhalt der von ihren qualifizierten Messpunkten aufgespannten Fläche grösser ist und/oder ihre geschätzte Genauigkeit grösser ist.

Im fünften Schritt der Folge wird geprüft, ob eine Pose für das Messgerät gespeichert ist (Schritt **S90**), wobei zwei Fälle unterschieden werden. Für den Fall, dass keine Pose für das Messgerät gespeichert ist (Nein in S90), wird die Zwischenpose, die im dritten Schritt (S50) oder vierten Schritt (S80) der Folge bestimmt wurde, als Pose für das Messgerät definiert oder mithilfe der qualifizierten Messpunkte wird eine aktualisierte Pose berechnet und als Pose für das Messgerät definiert (Schritt **S100**). Die Berechnung einer aktualisierten Pose mithilfe der qualifizierten Messpunkte hat den Vorteil, dass sämtliche qualifizierten Messpunkte berücksichtigt werden, wodurch die Genauigkeit der Pose verbessert werden kann.

Für den Fall, dass eine Pose für das Messgerät gespeichert ist (Ja in S90), wird die Zwischenpose, die im dritten Schritt (S50) oder vierten Schritt (S80) der Folge bestimmt wurde, vom Mikrocontroller 84 anhand eines vorgegebenen weiteren Vergleichs-Kriteriums mit der gespeicherten Pose verglichen (Schritt **S110**), wobei zwei Fälle unterschieden werden. Wird die Zwischenpose als besser geeignet bewertet (I in S110), wird die Zwischenpose als Pose definiert oder mithilfe der qualifizierten Messpunkte wird eine aktualisierte Pose berechnet und als Pose für das Messgerät 11 definiert (Schritt **S120**), das erfindungsgemäße Verfahren wird mit dem sechsten Schritt der Folge fortgesetzt. Wird die Zwischenpose als nicht besser geeignet bewertet (II in S110), wird das erfindungsgemäße Verfahren mit dem sechsten Schritt der Folge fortgesetzt. Die Berechnung einer aktualisierten Pose mithilfe der qualifizierten Messpunkte in Schritt S120 hat den Vorteil, dass sämtliche qualifizierten Messpunkte berücksichtigt werden, wodurch die Genauigkeit der Pose verbessert werden kann.

Als weiteres Vergleichs-Kriterium, mit dem die Zwischenpose und eine gespeicherte Pose in Schritt S90 verglichen werden können, wird mindestens eines der folgenden Kriterien verwendet: Anzahl der qualifizierten Messpunkte, Verteilung der qualifizierten Messpunkte entlang der Polylinie, Flächeninhalt der von den qualifizierten Messpunkten aufgespannten Fläche und geschätzte Genauigkeit einer Pose.

Der Mikrocontroller 84 vergleicht die Zwischenpose und eine gespeicherte Pose anhand des weiteren Vergleichs-Kriteriums miteinander. Die Zwischenpose wird als besser geeignet bewertet, wenn ihre Anzahl der qualifizierten Messpunkte grösser ist und/oder ihre qualifizierten Messpunkte über mehr Linienabschnitte der Polylinie verteilt sind und/oder der Flächeninhalt der von ihren qualifizierten Messpunkten aufgespannten Fläche grösser ist und/oder ihre Genauigkeit grösser ist.

Im sechsten Schritt der Folge wird anhand eines vorgegebenen Abbruch-Kriteriums entschieden, ob eine weitere Folge durchgeführt wird (Schritt **S130**), wobei drei Fälle unterschieden werden. Für den Fall, dass eine weitere Folge durchgeführt wird (I in S130), wird das erfindungsgemäße Verfahren mit dem ersten Schritt der Folge (S30) fortgesetzt. Für den Fall, dass keine weitere Folge durchgeführt wird und eine Pose für das Messgerät definiert ist (II in S130), wird die Pose vom Mikrocontroller 84 angezeigt (Schritt **S140**) und das erfindungsgemäße Verfahren beendet. Für den Fall, dass keine weitere Folge durchgeführt wird und keine Pose für das Messgerät definiert ist (III in S130), wird vom Mikrocontroller 84 die Information angezeigt, dass keine Pose für das Messgerät bestimmt wurde (Schritt **S150**), und das erfindungsgemäße Verfahren wird beendet.

Als Abbruch-Kriterium wird mindestens eines der folgenden Kriterien verwendet: Mindestanzahl M an Folgen, Mindestanzahl an qualifizierten Messpunkten, prozentualer Mindestwert der Anzahl der qualifizierten Messpunkte zur Anzahl der Messpunkte, absoluter Mindestwert für den Flächeninhalt der von den qualifizierten Messpunkten aufgespannten Fläche und ein prozentualer Mindestwert vom Flächeninhalt der von den qualifizierten Messpunkten aufgespannten Fläche zum Flächeninhalt des Polygons, das von der Polygonlinie umgeben ist.

Der Mikrocontroller 84 wendet das Abbruch-Kriterium an und beendet die Ausführung der Folgen, wenn eine Mindestanzahl M an Folgen erreicht ist und/oder die Anzahl der qualifizierten Messpunkte grösser als eine Mindestanzahl ist und/oder das Verhältnis zwischen der Anzahl der qualifizierten Messpunkte und der Anzahl der Messpunkte grösser als ein prozentualer Mindestwert ist und/oder der Flächeninhalt der von den qualifizierten Messpunkten aufgespannten Fläche grösser als ein absoluter Mindestwert ist und/oder das Verhältnis zwischen dem Flächeninhalt der von den qualifizierten Messpunkten aufgespannten Fläche und dem Flächeninhalt des Polygons grösser als ein prozentualer Mindestwert ist.

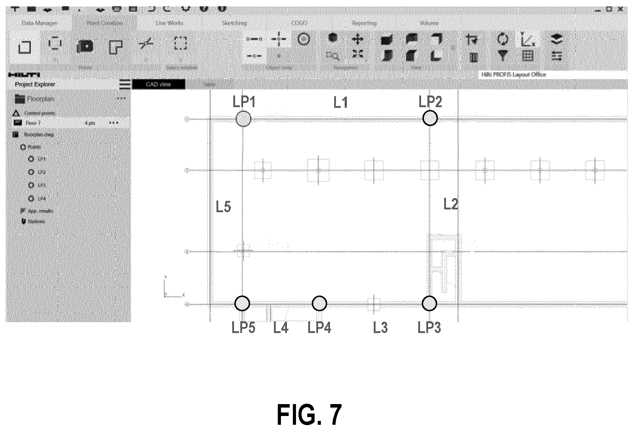

**FIG. 7** zeigt einen weiteren Screenshot des Bediencontrollers 13, der eine alternative Polylinie zeigt. Die Polylinie der FIG. 7 wird aus dem gleichen Geometriemodell der Messumgebung abgeleitet wie die Polylinie der FIG. 5 und unterscheidet sich von der Polylinie der FIG. 5 dadurch, dass ein unerlaubter Messbereich definiert wird.

Als unerlaubter Messbereich wird ein Bereich bezeichnet, bei dem das Geometriemodell von der tatsächlichen Messumgebung abweicht und/oder der Bereich für eine Messung mit dem Messgerät 11 unzugänglich oder ungeeignet ist. Beispiele für einen unerlaubten Messbereich können Türöffnungen, Fensteröffnungen, Glasscheiben, unzugängliche Bereiche sein.

Der Bediener bestimmt den ersten Punkt LP1, den zweiten Punkt LP2, den dritten Punkt LP3 und den vierten Punkt LP4; außerdem bestimmt der Bediener einen fünften Punkt **LP5,** der auf der Linie zwischen dem dritten Punkt LP3 und vierten Punkt LP4 liegt. Der Mikrocontroller 84 definiert die Linie zwischen dem ersten Punkt LP1 und zweiten Punkt LP2 als ersten Linienabschnitt L1, die Linie zwischen dem zweiten Punkt LP2 und dritten Punkt LP3 als zweiten Linienabschnitt L2, eine Linie zwischen dem dritten Punkt LP3 und fünften Punkt LP5 als vierten Linienabschnitt L4; die Linie zwischen dem vierten Punkt LP4 und fünften Punkt LP5 wird als unerlaubter Messbereich definiert. Die Polylinie wird gebildet aus dem ersten Linienabschnitt L1, dem zweiten Linienabschnitt L2, dem dritten Linienabschnitt L3 und dem vierten Linienabschnitt L4.

## Patentansprüche

1. Verfahren zum Berechnen der Pose eines Messgerätes (11), das in einer Messumgebung (12) mit mehreren Begrenzungsflächen (F-1, F-2, F-3, F-4) aufgestellt wird und das eine Distanzmesseinrichtung (42) mit einem Messstrahl (26) und mindestens eine Winkelmesseinrichtung (43, 45) aufweist, im Bezugssystem eines Geometriemodells, welches zumindest die Begrenzungsflächen (F-1, F-2, F-3, F-4) der Messumgebung (12) abbildet, mittels eines Mikrocontrollers (84), der mit dem Messgerät (11) kommunizierend verbunden ist und der einen Algorithmus zum Berechnen der Pose aufweist, mit den Schritten:
▪ Erstellen einer Polylinie aus dem Geometriemodell, wobei die Polylinie den horizontalen Verlauf der Begrenzungsflächen (F-1, F-2, F-3, F-4) senkrecht zur Gravitationsrichtung (33) darstellt und mindestens drei Linienabschnitte (LP1, LP2, LP3, LP4) umfasst (S10),
▪ Ausführen von N, N ≥ 4 Messungen mit dem Messgerät (11) in N verschiedenen Orientierungen des Messgerätes (11), wobei der Messstrahl (26) der Distanzmesseinrichtung (42) in den N verschiedenen Orientierungen auf mindestens zwei verschiedene Begrenzungsflächen (F-1, F-2, F-3, F-4) auftrifft und N verschiedene Messpunkte (MP-1, MP-2, MP-3, MP-4, MP-5) definiert und in jeder der N Orientierungen des Messgerätes (11) ein Horizontalwinkel (HPhi-1, HPhi-2, HPhi-3, HPhi-4, HPhi-5) und eine Horizontaldistanz (HD-1, HD-2, HD-3, HD-4, HD-5) zwischen dem jeweiligen Messpunkt und dem Messgerät (11) als Messwerte bestimmt werden (S20) und
▪ Ausführen des Algorithmus zum Berechnen der Pose, wobei der Algorithmus eine Folge von mindestens drei Schritten umfasst und die Schritte aus einem ersten Schritt, zweiten Schritt, dritten Schritt, vierten Schritt, fünften Schritt und sechsten Schritt ausgewählt sind, und
(1) im ersten Schritt drei Messpunkte der N Messpunkte (MP-1, MP-2, MP-3, MP-4, MP-5) und drei Linienabschnitte der Polylinie ausgewählt werden und für den Fall, dass vor dem Start des Algorithmus keine Zuordnung zwischen den Messpunkten (MP-1, MP-2, MP-3, MP-4, MP-5) und Linienabschnitten (LP1, LP2, LP3, LP4) durchgeführt wurde, die ausgewählten drei Messpunkte und ausgewählten drei Linienabschnitte einander zugeordnet werden (S30),
(2) im zweiten Schritt mittels der Messwerte der ausgewählten drei Messpunkte und der Koordinaten der ausgewählten drei Linienabschnitte die Anzahl der möglichen Lösungen für die Pose des Messgerätes (11) bestimmt wird (S40) und für den Fall, dass eine Lösung oder zwei Lösungen existieren, Messkoordinaten von mindestens zwei der ausgewählten drei Messpunkte im Bezugssystem des Geometriemodells bestimmt werden,
(3) im dritten Schritt
- für den Fall, dass im zweiten Schritt der Folge keine Lösung bestimmt wurde (Null in S40), das Verfahren mit dem sechsten Schritt der Folge fortgesetzt wird,
- für den Fall, dass im zweiten Schritt der Folge eine Lösung bestimmt wurde (Eins in S40), aus den Messkoordinaten und Messwerten eine Zwischenpose für das Messgerät berechnet wird, diejenigen Messpunkte der N Messpunkte, die ein vorgegebenes Qualitäts-Kriterium erfüllen, als qualifizierte Messpunkte bestimmt werden (S50) und das Verfahren mit dem fünften Schritt der Folge fortgesetzt wird,
- für den Fall, dass im zweiten Schritt der Folge zwei Lösungen bestimmt wurden (Zwei in S40), aus den Messkoordinaten und Messwerten eine erste Testpose und zweite Testpose berechnet werden, für die erste Testpose und zweite Testpose jeweils diejenigen Messpunkte der N Messpunkte, die ein vorgegebenes Qualitäts-Kriterium erfüllen, als erste qualifizierte Messpunkte bzw. zweite qualifizierte Messpunkte bestimmt werden (S60) und das Verfahren mit dem vierten Schritt der Folge fortgesetzt wird,
(4) im vierten Schritt die erste Testpose und zweite Testpose anhand eines vorgegebenen Vergleichs-Kriteriums hinsichtlich ihrer Eignung verglichen werden (S70), wobei
- für den Fall, dass eine der ersten Testpose und zweiten Testpose als besser geeignet bewertet wird (I in S70), diese Testpose als Zwischenpose definiert wird (S80) und das Verfahren mit dem fünften Schritt der Folge fortgesetzt wird, und
- für den Fall, dass keine der ersten Testpose und zweiten Testpose als besser geeignet bewertet wird (II in S70), das Verfahren mit dem sechsten Schritt der Folge fortgesetzt wird,
(5) im fünften Schritt geprüft wird, ob eine Pose für das Messgerät gespeichert ist (S90), wobei
- für den Fall, dass keine Pose für das Messgerät gespeichert ist (Nein in S90), die Zwischenpose, die im dritten Schritt (S50) oder vierten Schritt (S80) der Folge bestimmt wurde, als Pose für das Messgerät definiert wird oder mithilfe der qualifizierten Messpunkte eine aktualisierte Pose berechnet und als Pose für das Messgerät definiert wird (S100) und das Verfahren mit dem sechsten Schritt der Folge fortgesetzt wird, und
- für den Fall, dass eine Pose für das Messgerät gespeichert ist (Ja in S90), die Zwischenpose, die im dritten Schritt (S50) oder vierten Schritt (S60) der Folge bestimmt wurde, anhand eines vorgegebenen weiteren Vergleichs-Kriteriums mit der gespeicherten Pose verglichen wird (S110), wobei für den Fall, dass die Zwischenpose als besser geeignet bewertet wird (I in S110), die Zwischenpose als Pose definiert wird oder mithilfe der qualifizierten Messpunkte eine aktualisierte Pose berechnet und als Pose für das Messgerät definiert wird (S120) und das Verfahren mit dem sechsten Schritt der Folge fortgesetzt wird, und für den Fall, dass die Zwischenpose als nicht besser geeignet bewertet wird (II in S110), das Verfahren mit dem sechsten Schritt der Folge fortgesetzt wird, und
(6) im sechsten Schritt anhand eines vorgegebenen Abbruch-Kriteriums entschieden wird, ob eine weitere Folge durchgeführt wird (S130), wobei
- für den Fall, dass eine weitere Folge durchgeführt wird (I in S130), das Verfahren mit dem ersten Schritt der Folge fortgesetzt wird,
- für den Fall, dass keine weitere Folge durchgeführt wird und eine Pose für das Messgerät definiert ist (II in S130), das Verfahren beendet wird, und
- für den Fall, dass keine weitere Folge durchgeführt wird und keine Pose für das Messgerät definiert ist (III in S130), das Verfahren abgebrochen wird, ohne dass eine Pose für das Messgerät berechnet wurde.

2. Verfahren nach Anspruch 1, **dadurch gekennzeichnet, dass** im dritten Schritt der Folge als Qualitäts-Kriterium mindestens eines der folgenden Kriterien verwendet wird: Maximalabstand des Messpunktes zur Polylinie, eindeutige Zuordnung des Messpunktes zu einem Linienabschnitt der Polylinie und maximaler Auftreffwinkel des Messstrahls zum Linienabschnitt der Polylinie.

3. Verfahren nach Anspruch 1, **dadurch gekennzeichnet, dass** im vierten Schritt der Folge als Vergleichs-Kriterium mindestens eines der folgenden Kriterien verwendet wird: Anzahl der qualifizierten Messpunkte, Verteilung der qualifizierten Messpunkte entlang der Polylinie, Flächeninhalt der von den qualifizierten Messpunkten aufgespannten Fläche und eine geschätzte Genauigkeit einer Testpose.

4. Verfahren nach Anspruch 1, **dadurch gekennzeichnet, dass** im fünften Schritt der Folge als weiteres Vergleichs-Kriterium mindestens eines der folgenden Kriterien verwendet wird: Anzahl der qualifizierten Messpunkte, Verteilung der qualifizierten Messpunkte entlang der Polylinie, Flächeninhalt der von den qualifizierten Messpunkten aufgespannten Fläche und geschätzte Genauigkeit einer Pose.

5. Verfahren nach Anspruch 1, **dadurch gekennzeichnet, dass** im sechsten Schritt der Folge als Abbruch-Kriterium mindestens eines der folgenden Kriterien verwendet wird: Mindestanzahl M an Folgen, Mindestanzahl an qualifizierten Messpunkten, prozentualer Mindestwert der Anzahl der qualifizierten Messpunkte zur Anzahl der Messpunkte, absoluter Mindestwert für den Flächeninhalt der von den qualifizierten Messpunkten aufgespannten Fläche und ein prozentualer Mindestwert vom Flächeninhalt der von den qualifizierten Messpunkten aufgespannten Fläche zum Flächeninhalt des Polygons, das von der Polygonlinie umgeben ist.

6. Verfahren nach Anspruch 1, **dadurch gekennzeichnet, dass** beim Erstellen der Polylinie unerlaubte Messbereiche definiert werden, wobei die den unerlaubten Messbereichen zugeordneten Linienabschnitte der Polylinie als unerlaubte Linienabschnitte definiert und von der Auswahl der drei Linienabschnitte im ersten Schritt der Folge ausgeschlossen werden.

7. Verfahren nach Anspruch 6, **dadurch gekennzeichnet, dass** mindestens einer der folgenden Messbereiche als unerlaubter Messbereich definiert wird: Fensteröffnung, Türöffnung, Glasscheibe, Bereich, in dem das Geometriemodell von der Messumgebung (12) abweicht, und Bereich, der für die Messung unzugänglich oder ungeeignet ist.

8. Verfahren nach einem der Ansprüche 6 bis 7, **dadurch gekennzeichnet, dass** im dritten Schritt der Folge als Qualitäts-Kriterium die Zuordnung zu einem Linienabschnitt, der von einem unerlaubten Linienabschnitt verschieden ist, verwendet wird.

9. Verfahren nach Anspruch 1, **dadurch gekennzeichnet, dass** die N Messungen mit dem Messgerät (11) manuell von einem Bediener ausgeführt werden und die Messpunkte (MP-1, MP-2, MP-3, MP-4, MP-5) vom Bediener den Linienabschnitten der Polylinie zugeordnet werden.

10. Verfahren nach Anspruch 1, **dadurch gekennzeichnet, dass** die N Messungen mit dem Messgerät (11) vom Mikrocontroller (84) ausgeführt werden und die Messpunkte (MP-1, MP-2, MP-3, MP-4, MP-5) vom Bediener den Linienabschnitten der Polylinie zugeordnet werden.

11. Verfahren nach Anspruch 1, **dadurch gekennzeichnet, dass** die N Messungen mit dem Messgerät (11) manuell von einem Bediener ausgeführt werden und die im ersten Schritt der Folge vorzunehmende Zuordnung vom Mikrocontroller (84) zufällig oder mithilfe eines Auswahl-Kriteriums vorgenommen wird.

12. Verfahren nach Anspruch 1, **dadurch gekennzeichnet, dass** die N Messungen mit dem Messgerät (11) vom Mikrocontroller (84) ausgeführt werden und die im ersten Schritt der Folge vorzunehmende Zuordnung vom Mikrocontroller (84) zufällig oder mithilfe eines Auswahl-Kriteriums vorgenommen wird.

13. Verfahren nach einem der Ansprüche 11 bis 12, **dadurch gekennzeichnet, dass** als Auswahl-Kriterium mindestens eines der folgenden Kriterien verwendet wird: Reihenfolge der Linienabschnitte in der Drehrichtung des Messgerätes (11), Länge der Linienabschnitte und Abstände der Messpunkte zur Polylinie, wobei die Abstände mithilfe der Messwerte und einer Startpose für das Messgerät berechnet werden.

14. Verfahren nach einem der Ansprüche 1 bis 13, **dadurch gekennzeichnet, dass** das Messgerät (11) eine Kameraeinrichtung (47) aufweist und in jeder der N Orientierungen des Messgerätes (11) von der Kameraeinrichtung (47) ein Kamerabild erstellt wird, wobei das Kamerabild der jeweiligen Orientierung des Messgerätes (11) zugeordnet wird.
